# EUROPEAN PATENT SPECIFICATION

(11) **EP 1 060 025 B1**
(45) Date of publication and mention of the grant of the patent: **29.10.2003**
(21) Application number: 99906407.4
(22) Date of filing: 04.03.1999
(51) Int. Cl.: B01L 11/00, B01L 3/02

(54) **SYSTEM FOR PERFORMING ASSAYS ON A LEVITATED DROPLET**
VORRICHTUNG ZUR PROBENANALYSE AUF EINEM SCHWEBENDEN TRÖPFCHEN
SYSTEME POUR LA CONDUITE D'ANALYSES SUR UNE GOUTTELETTE SOUMISE A L'ACTION D'UN LEVITATEUR

(30) Priority: 04.03.1998 US 76769 P
(43) Date of publication of application: 20.12.2000
(73) Proprietor: Ortho-McNeil Pharmaceutical, Inc., Raritan, NJ 08869-0606 (US); Lund University, 22100 Lund (SE)
(72) Inventor: LAURELL, Thomas, S-224 73 Lund (SE); NILSSON, Johan, S-237 35 Bjarred (SE); SANTESSON, Sabina, S-214 35 Malmo (SE); NILSSON, Staffan, S-221 00 Lund (SE); ZIVIN, Robert, 920 Route 202, P.O. Box 300, Raritan, NJ (US); THURMOND, Robin, 920 Route 202, P.O. Box 300, Raritan, NJ (US); PATEL, Lekha, 920 Route 202, P.O. Box 300, Raritan, NJ (US)
(74) Representative: Mercer, Christopher Paul
(86) International application number: IB9900447
(87) International publication number: WO99044746

(56) References cited:
- WO-A-97/01085
- DE-A- 2 709 698
- DE-A- 3 806 634
- US-A- 5 275 787
- US-A- 5 558 837
- LIU H ET AL: "ANALYTICAL CHEMISTRY IN A DROP" TRAC, TRENDS IN ANALYTICAL CHEMISTRY, vol. 15, no. 9, 1 October 1996, pages 468-475, XP000641955
- TRUNK ET AL.: "Microchemistry : time dependence of an acid-base reaction in a single optically levitated microdroplet" CHEMICAL PHYSICS LETTERS, no. 264, 3 January 1997, pages 233-237, XP002104886 cited in the application

## Description

The present invention relates to a system for performing small volume assays and uses of the system.

In order to reduce the volume of reagents used in performing assays, especially when expensive reagents are used, it is desirable to reduce the volume in which the assay is to be performed.

Other advantages obtained from reducing the volume of an assay include a reduction in waste generation and an increase in assay throughput, due in part to the ability to run reactions with higher target and ligand/substrate concentrations.

A problem with performing assays using small volumes is that, when the sample contacts the container wall, alterations of the sample composition by adsorption of the sample on the wall or by desorption of interfering substances from the wall may occur. Other problems with using small volumes include liquid handling, buffer evaporation and sensitivity of detection.

The use of "levitators" for the suspension of droplets has been known for a number of years. There are a number of different types of levitator which have been used to suspend droplets, including electrostatic and magnetic levitators, which depend on particular characteristics of the droplet such as charge, and acoustic levitators, which do not depend on particular characteristics of the droplet.

Levitators have been used to suspend droplets for the study of drop arrays (Yuren *et al*., J. Aerosol Sci., 27, 721-737, 1996), to make micro and trace analyses using photometrical measurements of single suspended droplets (Welter *et al*., J. Anal. Chem., 357, 345-350, 1997), to measure the time dependence of an acid-base reaction in a single levitated droplet (Trunk *et al*., Chem. Phys. Lett., 264, 233-237, 1997) and to detect a single rhodamine 6G molecule in a levitated droplet (Barnes *et al*., Anal. Chem., 65, 2360-2365, 1993).

A flow-through sampling cell for extracting a precise sample amount which may be used for the generation of small drops is disclosed in WO 97/01085. The use of the sample cell to form samples for electrophoresis is disclosed.

To the best of our knowledge, none of these prior art systems has been used to perform complete biochemical or cell-based assays, especially those directed toward the discovery of new drug candidates in a screening environment.

A problem with these prior art systems for suspending droplets is that evaporation of the droplet occurs. Evaporation from the droplet leads to changes in the concentration of the components in the droplet and therefore affects the assay conditions. In the prior art systems, in order to reduce evaporation, suspended droplets are coated with an oil or another material in order to reduce evaporation, or the droplet is suspended in an atmosphere saturated with water.

The present invention provides a system, which overcomes, at least in part, the problems of the prior art systems and allows the performance of assays in small volumes.

The present invention provides a system for performing small volume assays as defined in the claims.

The system of the present invention can be used for the performance of an assay wherein a substance is added to the suspended droplet and the interaction of the added substance with the contents of the droplet is measured.

The system of the present invention has a number of advantages for the performance of assays.
1.The use of small volumes, approximately 1000-fold lower than possible with conventional instrumentation. This saves in materials and in the time needed for each assay. This also allows for studies to be carried out where the components are scarce such as hard to express proteins.
2.The avoidance of a container removes the problems associated with nonspecific binding to and contamination from container surfaces and reduces waste.
3.Improved sensitivity is obtained since the sample volume is low and the entire sample can be probed.
4.The dispenser for delivering a substance to the surface of the suspended droplet enables common reagents to be dispensed using the same dispenser since it never touches the complete assay mixture For example, compounds can be injected using a low dead volume, continuous flow-through system (J. Nilsson *et al*., Anal. Meth. Instr., Special Issue µTAS, 96, 88-91, 1996). This makes dispensing rapid and reduces waste. Another, commercially available dispenser suitable for this application is the remote mount "PixSys" device, from Cartesian Engineering, 17781 Skypark Circle, Irvine, CA 92714. Another device, recently described in the literature (Genetic Engineering News, 1998, 18(4), 16-17 from Packard Instruments (Meriden, CT), would also be appropriate.
5.Stably maintaining the droplet by compensating for evaporation from the droplet enables assays to be performed in a physiologically stable environment, thereby avoiding erroneous assay results due to physiological changes to the suspended droplet, such as an increase in buffer concentration due to evaporation.

The levitator used in the system of the present invention can be any levitator, which suspends a droplet, including electrostatic, magnetic and acoustic levitators as mentioned above. Preferably, the levitator is an acoustic levitator. A suitable levitator is the acoustical levitator APOS BA 10 with a standard frequency of 58kHz (Martinson Elektronic AB, Hagersten, Sweden).

The dispenser used in the system of the present invention can be any dispenser which is capable of delivering a substance to the surface of a suspended droplet. The dispenser may be a syringe such as a gas chromatography syringe. Preferably, the dispenser is a piezoelectric dispenser, such as the dispenser described by Hoffmann *et al*., (Rev. Sci. Instrum., 63, 823-824, 1992), and most preferably, the dispenser is the flow-through sampling cell disclosed in WO 97/01085 and in Nilsson *et al*., Anal. Meth. Instr., Special Issue µTAS, 96, 88-91, 1996. Such piezoelectric dispensers can eject droplets in the 50-100 picolitre range at a rate of one droplet to several hundred droplets per second. Other useful dispensors are described above.

The system of the present invention may comprise one or more dispensers wherein the one or more dispensers may be used to form a droplet and/or to add one or more substances to a droplet.

The substance to be added to the droplet may be any substance which enables an assay to be performed. The substance may be assayed itself or may assist in the performance of the assay. The substance may be a peptide, ligand, receptor, enzyme or drug compound, optionally labelled with, for example, a fluorophore. In a preferred embodiment, the substance added to the droplet is a substrate on which a component (e.g. an enzyme) present in the droplet acts to produce a detectable change.

The droplet is stably maintained by compensating for evaporation from the suspended droplet. The term "stably maintained" means that the suspended droplet has physiological stability, wherein physiological stability means that variations in the pH, ion concentration, buffer concentration, etc., within the suspended droplet are sufficiently small as to not significantly affect the assay result. Physiological stability is particularly important for enzymes and other substances which have a narrow physiological window of activity. An example of a particular enzyme which has a narrow physiological window of activity is the restriction endonuclease BamH1, which under conditions of low ionic strength, high enzyme concentration, high pH (>8.0) or high glycerol concentration (>5%), can display new, less specific activities (New England BioLabs, 1996/7 catalog and references therein (see page 241)). Similarly, cell-based assays require the maintanance of tight regulation of environmental conditions to ensure both the fidelity of the induced physiologic events under study and the viability of the cells themselves (general requirements described in "Culture of Animal Cells" A Manual of Basic Techniques", 2^{nd} ed., R. Ian Freshney, 1987, Alan R. Liss, Inc., NY, NY).

In a preferred embodiment, the suspended droplet is stably maintained by suspending the droplet in an atmosphere saturated with water. In a further preferred embodiment, the suspended droplet is stably maintained by delivering water to the suspended droplet thereby counteracting the effects of evaporation. In a further preferred embodiment, the suspended droplet is stably maintained by a combination of suspending the droplet in an atmosphere saturated with water and delivering water to the suspended droplet.

The rate of addition of water to the suspended droplet is dependent on a number of factors such as the evaporation rate from the droplet as well as the desired stable size of the droplet. Equilibrium will be reached between the rate of addition of water to the suspended droplet and the rate of evaporation from the droplet, at which point, the droplet will be maintained at a stable size.

The substance to be added to the droplet may also be any substance suitable for compensating for evaporation. Preferably, the substance is water.

Further information concerning the substances which may be delivered to the suspended droplet is given later when suitable assay formats are disclosed.

In a preferred embodiment, the one or more dispensers are used to deliver to the suspended droplet one or more substances to be assayed or substances which assist in the performance of the assay, and are also used to deliver water to the suspended droplet in order to compensate for evaporation from the droplet. Preferably, one dispenser is used to deliver to the suspended droplet one or more substances to be assayed or substances which assist in the performance of the assay and another dispenser is used to deliver water to the suspended droplet.

Preferably, the dispenser for delivering the substance to the surface of the suspended droplet is a piezoelectric dispenser and more preferably the dispenser for delivering the substance to the surface of the suspended droplet is the flow-through sampling cell disclosed in WO 97/01085. The use of dispensers which deliver a substance to the surface of a droplet has the advantage that the risk of contamination is reduced as there is no contact between the dispenser and the suspended droplet.

The dispenser for delivering a substance to the suspended droplet can also be used to form the suspended droplet. The dispenser may form one droplet that is to be suspended or may build up the droplet in stages by sequentially adding components thereby forming a suspended droplet. Alternatively, the suspended droplet can be formed by using a needle and a capillary smeared with sunflower or other suitable oil. The sample droplet is removed from the tip of the needle by the oily capillary and then deposited in the levitator. An advantage of using the dispenser to form the droplet is that more control of the size of the droplet can be achieved, thereby enabling more consistent droplet sizes to be obtained.

In a preferred embodiment, the substance delivered to the suspended droplet using the system of the present invention is water.

In use, different dispensers can be used when adding different substances and the rate of use of the dispensers is preferably controlled so that evaporation is counteracted so that the size of the droplet remains the same. For example, when a substance such as an enzyme or substrate is added to the droplet, the size of the droplet changes and so the concentrations of the reactants in the droplet change. Accordingly, the rate at which the different substances, i.e. the enzyme, substrate or water, are added, should be controlled so that evaporation is counteracted and the concentrations of the various reactants in the droplet are stably maintained.

The system of the present invention may comprises more than one levitator. When the system of the present invention does comprise more than one levitator, the dispensers for forming or delivering substances to suspended droplets may be used for more than one levitator. However, it is preferred that each levitator has a water dispenser associated with it so that water may be continually delivered to the surface of the suspended droplet to counteract the effects of evaporation.

The detector system of the present invention may be any detector system suitable for detecting a change in the suspended droplet. The detector system may be used to detect fluorescence, radioactivity, chemiluminescence or colorimetric changes.

Suitable detector systems for use in the present invention are well known to those skilled in the art.

When fluorescence or colorimetric changes are being detected, the detector system preferably comprises a spectrophotometer arranged for irradiating the suspended droplet with light and detecting the emitted or reflected light. Suitable spectrophotometers include model MPF-2A from Perkin-Elmer, USA.

In an alternative embodiment of the present invention, when fluorescence or colorimetric changes are being detected, the detector system comprises a Mercury lamp for irradiating the suspended droplet and a charge coupled device (CCD) camera. A suitable detector system comprising a CCD camera and a mercury lamp is described in Nilsson, S., *et al*., O J. Capillary Electrophor. 1995, 2, 46; and Johansson, J., *et al*., Anal. Chem., 1996, 68, 2766.

When chemiluminescence is being detected, the detector system preferably comprises CCD imaging as before or a Photo multiplier tube for single point detection.

When radioactivity is being detected, the detector system could be similar to that used for chemiluminescence (above), photon generation carried out by addition of a scintillant to the drop, preferably in the form of an SPA bead (Amersham, Plc.) to meassure binding interactions.

The suspended droplet preferably has a volume of 1fl to 1ml, preferably 1fl to 100µl and more preferably 1pl to 1µl.

The suspended droplet may contain any substance. Preferred substances include proteins such as enzymes, enzyme substrates, antibodies or antibody fragments (Fab, F(ab')₂ and Fv fragments), peptides, proteases, receptors, ligands, hormones, and candidate drug molecules, as well as carbohydrates or other polymers and/or their ligands Other preferred materials for inclusion in the drop are cells or cell fragments.

The suspended droplet may also contain whole cells. Suitable cells include any cell that can be suspended in culture medium. Particularly suitable cells include bacterial cells such as *E. coli* cells, mammalian cells such as Chinese Hamster Ovary (CHO) cells and NIH 3T3 cells, and yeast cells such as *S. cerevisiae* cells. If necessary, the suspended droplet can contain microsphere supports to which cells are attached. Suitable microsphere supports for attaching cells are well known to those skilled in the art and can be commercially obtained, for example CultiSpher.

The suspended droplet may contain beads impregnated or coated with substances for immobilising specific components such as receptors or ligands. Furthermore, the beads may be impregnated with fluorophores or other components which can detect bound compounds. Such impregnated beads are described in Udenfriend *et al*., Anal. Biochem., 161, 494-500, 1987, herein incorporated by reference.

In a preferred embodiment, the system of the present invention comprises:
1 a central illumination source;
2 one or more dispensers for forming a suspended droplet and/or for delivering a substance to the surface of a suspended droplet;
3 one or more levitators positioned adjacent the illumination source and in a position wherein the suspended droplet can be illuminated by rotation of the illumination source; and
4 detectors positioned for measuring changes in the suspended droplets.

Preferably, the illumination source is associated with a mirror or other reflector, which can be used to cause the light emitted to be rotated around the central illumination source. Preferably, the mirror or other reflector is a one way rotating prism.

Preferably, the illumination source is a laser.

Preferably, a number of levitators are used so that a number of suspended droplets are formed around the central illumination source in a position so that each suspended droplet can be illuminated by the rotating light.

Preferably, the detectors are for detecting light absorbance or fluorescence from the suspended droplets. Accordingly, the detectors are positioned in different positions relative to the suspended droplets depending on whether they are detecting absorbance or fluorescence.

Preferably, the system also comprises an extractor to remove suspended droplets after they have been assayed, allowing rapid, serial use of each detector channel.

The present invention further provides the use of the system of the present invention in performing an assay.

Preferably, the system of the present invention is used in the performance of a screening assay for drug candidates.

In a preferred embodiment of the present invention, the system of the present invention is designed to perform rapid, sequential assays without the need for cuvettes, wells or capillaries.

As indicated above, the system is based on trapping and holding droplets, preferably in the pressure nodes of a standing ultrasonic field. Preferably, piezoelectric dispensers are used to dispense droplets into the field, using multiple injections to build the desired assay volume. Once there, dispensers are used to add additional components to the suspended droplet. Preferably, one dispenser adds water to compensate for evaporation. Reactions in the suspended droplet can be measured using optical techniques, such as by using a laser to cause fluorescence emission from the sample. As an example of a typical assay, an enzyme in an appropriate buffer is injected into the ultrasonic field, creating a droplet of the desired volume. Next, a second dispenser adds to the droplet a substrate yielding a fluorescent signal when acted upon by the enzyme. The activity of the enzyme is then read by illuminating the entire droplet with a laser and detecting emission using either a PMT or CCD to detect fluorescence, absorbence, polarization, etc.

The system of the present invention is particularly useful in drug screening where an additional dispenser injects a compound of interest and its effects on the enzyme are observed. After analysis the drop is removed with an extractor or a stream of air and the next assay is performed.

Preferred assays to be performed using the system of the present invention are discussed below.

### Fluorescence Resonance Energy Transfer (FRET).

This is a technique used for monitoring the activity of proteases (see Matayoshi *et al*., Science, 247, 954, 1990 and Wang *et al*., Tetrahedron Lett., 31, 6493, 1990). A peptide substrate is labelled with a matched pair of donor and acceptor fluorophores. Prior to cleavage, fluorescence is quenched due to FRET, as the fluorescent emission of the donor fluor is effectively absorbed by the acceptor dye. Upon cleavage of the labelled peptide, spatial separation of the fluorophores occurs, which results in a 40-50 fold increase in donor fluorescence. For this type of assay, the major advantage of using the system of the present invention is that the reaction volumes can be reduced by a factor of approximately 1000 compared to existing instruments. Similarly, FRET can be used to follow the interaction of two label materials (protein-protein, protein-ligand, etc.) as well as the effect of additional substances on the labelled pair (Patel, L.R., *et al*., 1994, PNAS USA, 91, 7360-7364).

For example, the peptide KRPLGLARC can be cleaved by the matrix metalloproteinase, matrilysin, between the alanine (A) and leucine (L) residues. The C-terminus cysteine can be labelled with AEDENS (a fluorophor excitable by light in the 300-400nm range, available from Molecular Probes, Eugene, OR) and the N-terminus can be labelled with DABCYL (a chromophor capable of absorbing the fluorescent output of AEDENS, when brought in close proximity). This will result in a strong quenching of the AEDENS fluorescence. When matrilysin is present, the fluorescent intensity of AEDENS increases in a time dependent manner as the peptide is cleaved. This is based the distance between these two molecules, and therefore the presence or absence of enzyme activity (see Handbook of Fluorescent Probes and Research Chemicals, 6^{th} edition, 1996, by Richard P. Haugland, Molecular Probes, Eugene, OR pp225-234).

The system of the present invention may therefore be used to detect the presence of matrilysin or any other proteinase.

### Fluorescence Polarization (FP).

FP is a powerful technology for the study of molecular interactions in solution. See Jolley *et al*., Biomol. Screening, 1, 33-38, 1996, and Dandliker *et al*., Lab. Res. Methods Biol. Med., 4, 65-88, 1980. This technology has been extensively used in studies of small ligands binding to their receptors and can also be used to study the conversion of large molecules to small ones. It is unique among the methods used to analyse molecular binding because it gives a direct measure of the bound/free ratio without physical separation of bound tracer from free (unbound) tracer. FP measures the rotation of fluorescent molecules by changes in the polarization of the emitted light. If polarised light is used to excite a stationary fluorophore, it will also emit light at a particular polarization. However, if the fluorophore rotates between the time it absorbs and the time it fluoresces the polarization will change. Therefore, the rate of tumbling is related to the polarization of the emitted light. When a fluorescent ligand binds to a macromolecule, its rotation is greatly slowed and the polarization of the emitted light is more similar to that of the incident beam. When many molecules are present, the random tumbling will cause polarized light to be less polarized in the absence of the macromolecule, but will retain more of its polarization in its presence.

In practice, a labelled ligand is measured in both the presence and absence of its receptor and an increase in FP indicates binding. In addition to soluble receptors, the binding of labelled ligands to membrane receptors can be carried out by injecting droplets containing cells or membranes and then levitating these droplets. A major advantage for the use of FP assays in the system of the present invention is the lack of surfaces. Non-specific binding of the fluorophore to the surfaces of the container yields non-specific increases in FP.

For example, the binding of fluorescently labelled estrogen to the estrogen receptor can be measured using the technique. The increase in polarization as the ligand is bound to the receptor gives a direct read out of the binding.

### Homogeneous Time-Resolved Fluorescence.

An instrument for carrying out this method is marketed commercially by Packard Instruments, among others. This method is a more specialised form of FRET described above (see Kolb *et al*., J. Biomol. Screening, 1(4), 203-210, 1996, US-A-5,527,6847 and US-A-5,534,622). The technique uses Eu(3+) trisbipyridine cryptate (Eu(K)) as the donor and modified allophycocyanin as the acceptor. The donor has a very long fluorescent lifetime whereas the acceptor's lifetime is relatively short. These time-resolved components result in a large increase in the signal to noise ratio. This is ideal for looking at the interaction between a labelled ligand and its labelled receptor since the average effective distances that can be examined for energy transfer are relatively large (>10nm), allowing for rapid construction of assays.

For example, Src kinase is able to phosphorylate the peptide LCKVEKIGEGTYGVVYK on one or both of the tyrosines (Y). This peptide can also be biotinylated without affecting its utility as a substrate for Src. First, the reaction is carried out to phosphorylate the peptide. Next, anti-phosphotyrosine antibody labelled with Eu(K) and allophycocyanin coupled to steptavidin are added. If the peptide is phosphorylated, the two components both bind to the peptide and the energy transfer can be measured. The use of this assay in the system of the present invention has the advantage of being able to make rapid, pipette-free additions of all of the components using very small volumes of these expensive reagents.

### Chemiluminescence.

Chemiluminescence techniques like those marketed by Tropix are amenable for use in the system of the present invention. The technique relies on certain molecules that emit visible light upon their breakdown. This can be coupled to enzymatic modifications and therefore provides a readout of enzyme activity.

For example, Glucton® marketed by Tropix is a substrate for β-galactosidase. Upon cleavage by β-galactosidase, the product is unstable and, upon decay, emits light. This can readily be followed using a PMT.

### Fluorescence Correlation Spectroscopy (FCS).

FCS is described by Sterrer and Henko, J. Recept. Signal Trans. Res., 17, 511-520, 1997. FCS measures fluctuations in fluorescence as molecules move in and out of a small volume. Typically, small volumes are illuminated and as molecules diffuse into the illuminated region they fluoresce. The diffusion into the illuminated region (i.e. sampling region) is a function of the number of molecules and the translational diffusion time. The measurements are taken in a time resolved manner and the number of molecules in the sample volume and the diffusion time can be computed using an autocorrelation function. The key is that smaller molecules diffuse faster than larger ones and can be readily distinguished. An example would be detecting the ratio of free ligand to ligand bound to receptors. In the prior art instrumentation, this requires microtitre plates of high optical quality and the need for the plates to be agitated. The system of the present invention minimises both of these drawbacks since a cuvette is not used and the small volume allows for rapid diffusion throughout the entire drop in a short time.

For example, the estrogen receptor binding assay described under the FP section can also be probed using this method.

### Scintillation Proximity Assays (SPA).

This technique is marketed by Amersham who have created beads which detect the proximity of tritium or ¹²⁵I (Udenfriend *et al*., Anal. Biochem., 161(2), 494-500, 1987 and Cook, Drug Discovery Today, 1(7), 287-294, 1996). In practice, the beads are coated with membranes containing the receptor of interest. When a labelled ligand binds to the receptor it is in close enough proximity to excite fluorophores inside the beads and light is emitted. The system of the present invention is useful for such a method since there is no problem in levitating beads within droplets. The major advantage is that, since there are no plates to hold the samples, the amount of radioactive waste becomes minimal.

For, example, SPA beads coated with wheat germ aggulutinin can be used to immobilize human neuroblastoma cells expressing neuropeptide Y receptor. When this is mixed with ¹²⁵I labelled neuropeptide Y, binding can be detected by increases in emission from the SPA beads.

### Whole cell assays.

The ability to dispense and levitate whole cells allows for many types of assays. Any cell based assay that has a optical readout can be used in this system. Furthermore, anchorage dependent cells can be used in conjunction with microsphere supports.

For example:
1. Ligand induced fatty acid releases. This can be used as a general method for detecting ligand/receptor interactions. NIH 3T3 cells are transfected with the receptor of interest and chimeric G-proteins, which couple it to the appropriate pathway. After differentiation into adipocytes, the cells release free fatty acids in response to the ligand. Because the volumes in this instrument are low, the pH of the entire droplet changes as a result of this and can be measured using standard pH sensitive dyes such as 8-hydroxypyrene-1,3,6-trisulphonic acid (HPTS).
2. Ligand induced Ca²⁺ mobilization in cells. Cells expressing the receptor of interest and preloaded with fluorescent Ca²⁺ chelator are levitated and the release of calcium monitored in response to the ligands.
3. Extracellular release of oxidative products. Neutrophils in the presence of OxyBURST Green H₂HFF BS (Molecular Probes) are levitated and the release of oxidative products in response to ligands is measured by fluorescence. Once again the advantage of small volumes greatly improves the sensitivity of this technique over conventional methods.

### Colorimetric Methods.

Most high sensitivity colorimetric assays currently used today could be used in this system, including colorimetric serine protease assays or β-galactosidase assays.

For example, the assay of proteases by diazotization of p-nitroaniline in microplates is a colrimetric assay. The protease assay consists of diazotization of p-nitroaniline, released from any p-nitroanilide substrate, with naphthylethylenediamine dihydrochloride to form a purple azo complex which can be measured at 540 nm. For example, trypsin, chymotrypsin, aminopeptidase, and elastase-like protease activities can be measured using benzoyl-Arg-p-nitroanilide, succinyl-Ala2-Pro-Phe-p-nitroanilide, Leu-p-nitroanilide, and succinyl-Ala3-p-nitroanilide at lower enzyme concentrations than previously detectable with these substrates. The basis of the assay is the Bratton-Marshall reaction, which allows improved sensitivity of the assay by increasing the maximum absorption of the product. This assay may have clinical applications in the measurement of leucine aminopeptidase in serum samples (see Lee *et al*., Anal. Biochem., 218(2), 480-482 (1994)).

Similarly, the presence or induction of the expression of glycolytic or other enzymes can be followed by the formation of highly colored or fluorescent products as a consequence of enzyme avtivity. Examples of these enzymes and substrates include β-galactosidease and 5-bromo-4-chloro-3-indolyl (chromogenic) or fluorescein diagalactoside (fluorogenic). Many other suitable enzyme/substrate pairs are described in Handbook of Fluorescent Probes and Research Chemicals, 6^{th} edition, 1996, by Rchard P. Haugland, Molecular Probes, Eugene, OR.

The present invention is now described in detail with reference to the following Figures and examples. It will be appreciated that the invention is described by way of example only and modifications of detail may be made without departing from the scope of the claims.
Figure 1 shows the instrumental set up for fluorescence measurements with a mercury lamp and CCD camera wherein (1) is an electromechanical shutter, (2) is an infrared filter, (3) is an NG-filter, (4) is a cylindrical lens, (5) is an interference filter (405 or 435nm), (6) is an aperture, (7) is an interference filter (510nm), (8) is a lens system, (9) is a continuous microdispenser (CMD) and (10) is an injector.

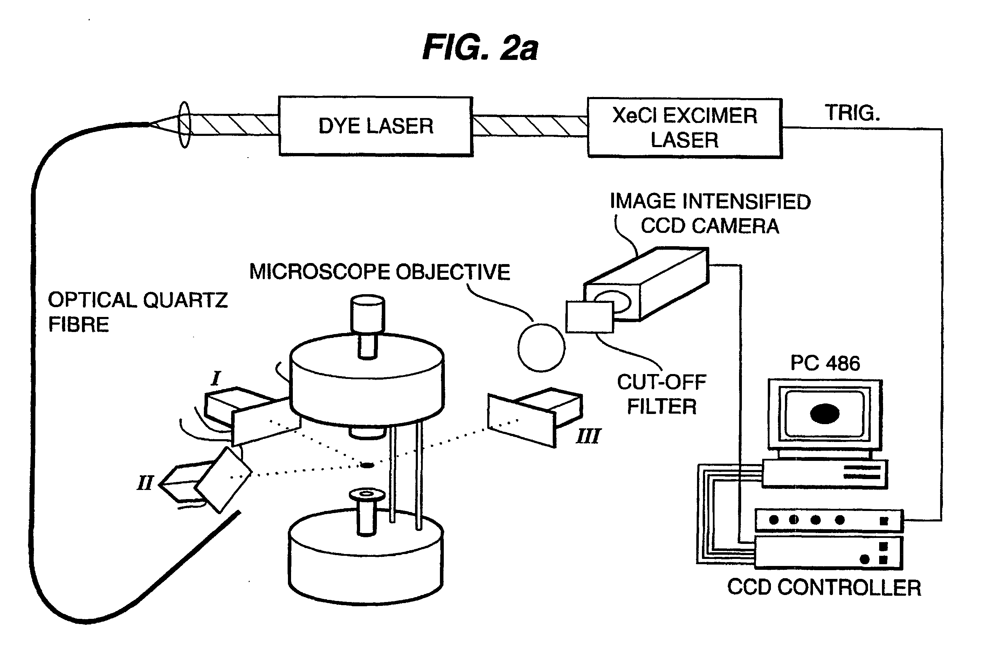

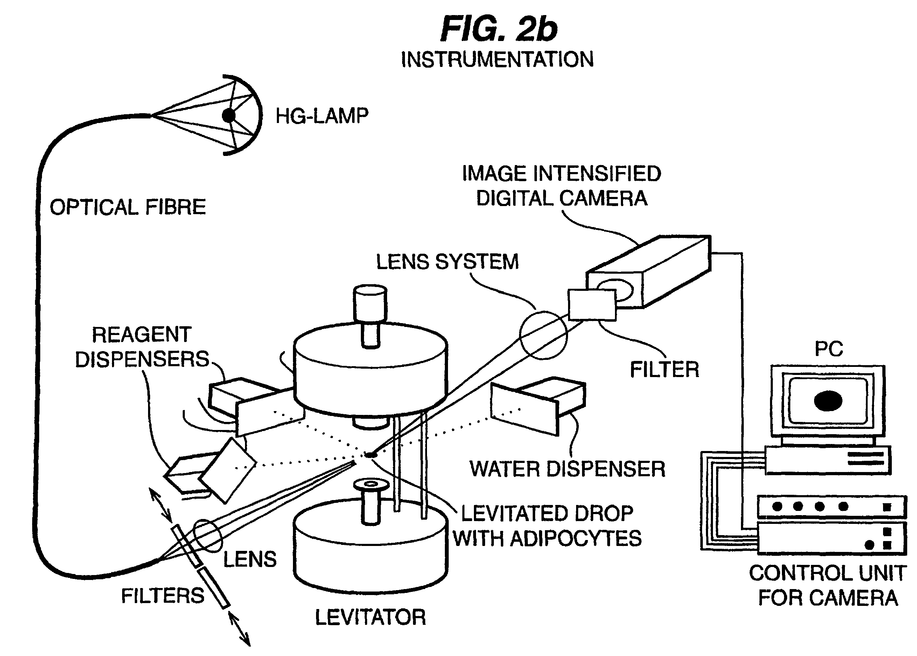

Figure 2 shows two alternative set-ups for fluorescence measurements (Figure 2a and 2b, respectively).
Figure 3 shows a levitator and three dispensers wherein dispenser I delivers single or several cells and may also deliver cells grown microcarierrs. Dispenser II delivers water to keep the levitated droplet at a constant size and Dispenser III is used for delivering different types of analyts, for example drug- candidates.
Figure 4 shows fluorescence intensities (measured as peak height in mm) during droplet evaporation measured with fluorescence spectrophotometer (0.1 mM HPTS and 1.3% PCV in titration buffer).
Figure 5 shows fluorescence intensity ratio during droplet evaporation measured with fluorescence spectrophotometer (0.1 mM HPTS and 1.3% PCV in titration buffer).
Figure 6 shows fluorescence intensities (measured as peak height in mm) during lipolysis measured with fluorescence spectrophotometer (0.1 mM HPTS and 1.3% PCV in titration buffer). Manual addition of about 1 µl of isoprenaline and insulin to the droplet after 2 and 7 minutes, respectively.
Figure 7 shows fluorescence intensity ratio during lipolysis in droplet measured with fluorescence spectrophotometer (0.1 mM HPTS and 1.3% PCV in titration buffer). Manual addition of about 1 µl of isoprenaline and insulin to the droplet after 2 and 7 minutes, respectively.
Figure 8 shows fluorescence intensities during droplet evaporation measured with mercury lamp and CCD camera (1.0 mM HPTS and 1.3% PCV in titration buffer). Results evaluated with WinView 1.3.
Figure 9 shows fluorescence intensities during droplet evaporation measured with mercury lamp and CCD camera (1.0 nM HPTS and 1.3% PCV in titration buffer). Results evaluated with WinView 1.3.
Figure 10 shows fluorescence intensity ratios during droplet evaporation measured with mercury lamp and CCD camera (0.1 nM HPTS and 1.3% PCV in titration buffer). Results evaluated with WinView 1.3.
Figure 11 shows fluorescence intensities during continuous water addition with a CMD (operating at 10 Hz) to droplet measured with mercury lamp and CCD camera (10 nM HPTS and 1.3% PCV in titration buffer). Results evaluated with Drop.
Figure 12 shows fluorescence intensities during continuous water addition with a CMD operating with frequencies 10, 50 and 100 Hz, measured with mercury lamp and CCD camera (1 nM HPTS and 1.3% PCV in titration buffer). Results evaluated with Drop.
Figure 13 shows fluorescence intensities during lipolysis in droplet measured with mercury lamp and CCD camera (1 nM HPTS and 1.3% PCV in titration buffer). Manual addition of 1µl of 300 nM isoprenaline and 1 µl of 1 nM insulin after 2 and 7.8 minutes, respectively. Results evaluated with Drop.
Figure 14 shows fluorescence intensity ratios during lipolysis in droplet measured with mercury lamp and CCD camera (1 nM HPTS and 1.3% PCV in titration buffer). Manual addition of 1µl of 300 nM isoprenaline and 1 µl of 1 nM insulin after 2 and 7.8 minutes, respectively.
Figure 15 shows fluorescence intensities during lipolysis in droplet with continuous water addition with a CMD (operating frequency 10 Hz), measured with mercury lamp and CCD camera (10 nM HPTS and 1.3% PCV in titration buffer). Manual addition of 1µl of 300 nM isoprenaline and 1 µl of 1 nM insulin after 2 and 5.5 minutes, respectively. Results evaluated with Drop.
Figure 16 shows fluorescence intensity ratios during lipolysis in droplet with continuous water addition with a CMD (operating frequency 10 Hz), measured with mercury lamp and CCD camera (10 nM HPTS and 1.3% PCV in titration buffer). Manual addition of 1µl of 300 nM isoprenaline and 1 µl of 1 nM insulin after 2 and 5.5 minutes, respectively. Results evaluated with Drop.
Figure 17 shows the fluorescence intensity ratios of two experiments during 80 seconds with 0.5µl droplets containing 14 adipocytes each and 10nM HPTS in titration buffer. One of the experiments shows droplet evaporation and the other volume control using the CMD (at a frequency of 10 Hz) to add water to the droplet. The instrumental set-up included mercury lamp and CCD camera and the results were evaluated with Drop.

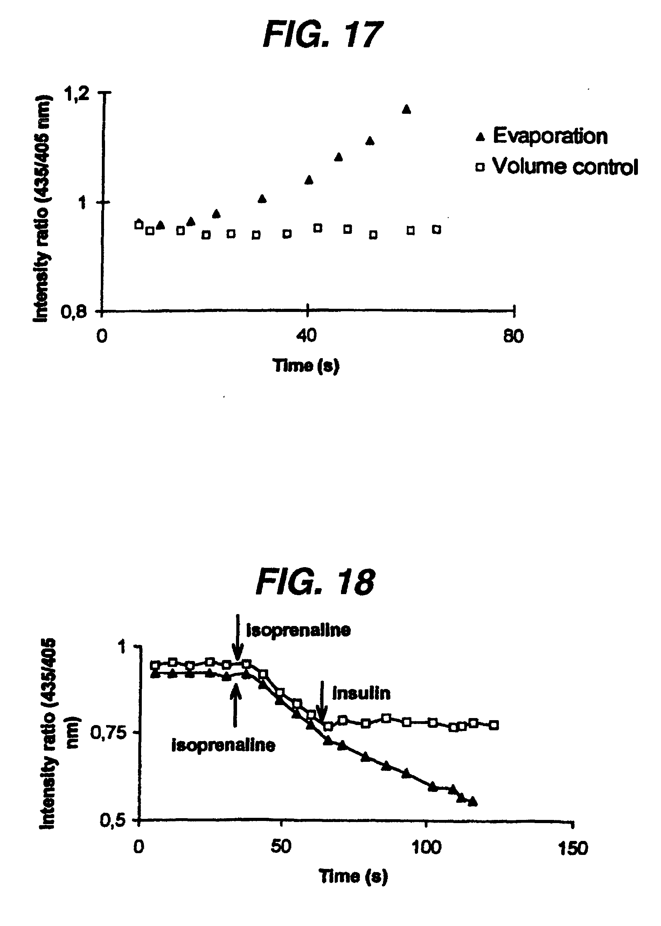

Figure 18 shows fluorescence intensity ratios during two experiments with lipolysis in 0.5µl droplets with continuous water addition using the CMD (operating frequency 10Hz), measured with mercury lamp and CCD camera. The droplets contained 12 adipocytes each and 10nM HPTS in titration buffer. The CMD was used to add 300nM isoprenaline to the droplet in both experiments after 35 seconds. The CMD was further employed to add 1nM insulin to the droplet in one of the experiments after 65 seconds. The instrumental set-up included mercury lamp and CCD camera, and the results were evaluated with Drop.

### EXPERIMENTAL

### EXAMPLE

In this example, adipocytes and the process of lipolysis have been the object of examination. The addition of adrenergic substances, in this case isoprenaline, to the droplet sets off the process of lipolysis in the cells. When free fatty acids are consequently released from the cells, the pH of the surrounding buffer decreases. Addition of insulin stops the lipolysis and hence also stops the decrease in pH. By irradiating pH-dependent fluorophors in the buffer with light of specific wavelength, the changes in pH can be followed by continually monitoring the droplet with a charge coupled device (CCD) camera.

The fluorophor used in the example is 8-hydroxypyrene-1,3,6-trisulphonic acid trisodium salt (HPTS), which is a highly water-soluble, membrane-impermeant pH indicator with a pKa of around 7.3 in aqueous buffers (depending upon ionic strength). This is in the middle of the physiological pH range, which makes HPTS an ideal fluorophor for physiological pH-measurements (7-10). It exhibits a pH-dependent absorption shift and an emission maximum at 511 nm, allowing ratiometric measurements using an excitation ratio of 435/405 nm. The fluorescence of HPTS increases with pH when exciting at 435 nm and decreases with pH when exciting at 405 nm.. A disadvantage, however, is the sensitivity of the method towards daylight, so titrations should preferably be performed in diffuse light or in the dark. During the experiments, the adipocytes were kept in a titration buffer with HPTS and a low buffering capacity.

Using a mercury lamp and a CCD camera, the fluorophor concentration detection limit equalled an HPTS concentration in a droplet of 1 nM. Evaporation of the droplet was found to influence the fluorescence intensities, in that they increase when the droplet volume decreases. To avoid this, a continuous microdispenser (CMD) was used to continually add small amounts of water of the droplet to compensate for evaporation. When additives were introduced into the droplet, hence increasing droplet volume, this also affected the intensities. The process of lipolysis was detectable both during evaporation and when the effects of evaporation were compensated for by the addition of water. Working with CMD, however, provided the best and most distinct results.

### Adipocytes and buffers

Isolated adipocytes from male Sprague-Dawley rats, prepared by collagenase digestion, were kindly provided by Eva Degerman, MD, PhD, Section for Molecular Signalling, Department of Cell and Molecular Biology, Center for Chemistry and Chemical Engineering, Lund.

The cells were kept suspended in a Krebs-Ringer-HEPES buffer pH 7.40 (NaCl, 118.6 mM; KCl, 4.74 mM; CaCl₂, 2.54 mM; KH₂PO₄, 1.19 mM; MgSO₄, 1.19 mM; HEPES, 25 mM) containing 1.75% (w/v) bovine serum albumin (BSA), 2mM glucose and 200 nM adenosine (storage buffer). Every two hours, the storage buffer was removed and the cells were washed with new storage buffer.

Immediately before the levitated pH-stat titrations, the storage buffer was removed and replaced with a modified Krebs-Ringer buffer with low buffering capacity and pH 7.40 (NaCl, 131 mM; KCI, 4.74 mM; CaCl₂, 2.54 mM; KH₂PO₄, 1.19 mM; MgSO₄, 1.19 mM) containing 1.75% (w/v) BSA, 2 mM glucose and 200 nM adenosine (titration buffer). This medium also contained HPTS.

For experimental purposes, 100 µL of 13% (v/v) packed cell volume (PCV) was diluted to 1 mL in titration buffer containing HPTS, yielding a suspension of 1.3% PCV. (One mL PCV contains around 10⁷ cells). As 2.5 µL droplets were used, this means that the cell number per droplet was approximately 325 cells. The actual number of cells was counted for some of the droplets. As the droplets were removed from the ultrasonic field by the capillary, they were placed on an objective glass and then counted in a microscope. In general, this showed that the estimation of 325 cells per droplet was accurate, although deviations did occur.

### Additives for titrations

To start the lipolysis in the adipocytes, 1 µL of 300nM isoprenaline was used. The isoprenaline was obtained from Sigma, St Louis, Illinois, USA.

Human insulin was a kind gift from Novo Nordisk, Gentofte. One µL of 1 nM insulin was injected into the droplets to break off the process of lipolysis. The insulin was also meant to serve as a control to make sure that the cells had not been damaged during the previous experiments, because if they had, the pH of the titration buffer would not stop decreasing when the insulin was added since all the fatty acids of the cells would have leaked out.

To check the changes in fluorescence emission of HPTS due to various pH values, 1 µL sodium hydroxide of concentrations 1 mM and 0.5 mM, respectively, and 1 µL acetic acid of concentrations 1 mM and 0.5 mM, respectively, was used.

### The ultrasonic levitator

An ultrasonic levitator was used for the levitated titrations. The levitator is a device that generates a standing wave with equally spaced nodes and antinodes by multiple reflections between an ultrasonic radiator and a solid reflector. The levitator operates with a standard frequency of 58 kHz which means that the distance between the ultrasound transmitter and the reflector is approximately 1.7 cm, resulting in five nodal points of the standing wave.

### Deployment of droplets and additives

To position the droplet in the ultrasound field, a 0.8x40 mm needle was used. The droplet of sample was removed from the tip of the needle by a capillary (TSP 025 375, Polymicro Technologies Inc., Phoenix, Arizona, USA) smeared with sunflower oil, after which is was deposited in the ultrasonic field.

The droplets were always positioned in the node directly above the middle of the levitator. This had practical and operational reasons only. As regards the droplet shape, the aim was always to keep the droplet as spherical as possible.

The average size of the droplets used was approximately 2.5 µL. This was established by weighing a large number of droplets of water and calculating the volume.

Additives were manually introduced into the levitated droplet by a gas chromatography 5 µL-syringe with a capillary fused silica needle (outer diameter 0.17 mm, 5A-SOC-100SA, Scientific Glass Engineering Inc., Austin, Texas, USA).

Water was continually added to the droplet by a continuous microdispenser (CMD), which was kindly provided by the Department of Electrical Measurements, Lund Institute of Technology, Lund. Connected to an injector, this was also used to introduce isoprenaline into the droplet. The dispenser used is that described by Nilsson *et al*., (Anal. Meth. Instr., Special Issue µ TAS, 96, 88-91, 1996).

### Fluorescence measurements

To follow the release of protons from cells and the changes in pH, HPTS was used (obtained from Molecular Probes via LabKemi, Lund).

### The fluorescence spectrophotometer

The fluorescence spectrophotometer used was a model MPF-2A from PERKIN-ELMER, USA, designed for the measurement of fluorescence excitation and emission spectra. It includes two grating monochromators, one for irradiating a sample with monochromatic light in the 200 to 700 nm range (excitation monochromator) and the other for permitting selective measurement of the intensity of the light emitted by the sample in the 220 to 800 nm range (emission monochromator). It also includes two lenses to focus the light in the sample cell and another lens to focus the emitted light into the emission monochromator.

The fluorescence spectrophotometer consists of a spectrophotometer (which contains the monochromators, two photomultipliers and a Xenon lamp source), a power supply for the lamp source, an amplifier and a recorder. The spectrophotometer sample compartment with cuvette holders and focusing lenses was removed and replaced with the levitator. The focusing lenses were taken apart, rearranged, and positioned to fit into the levitator. The lenses were positioned at exactly the right distance from the centre of the droplet in the levitator (the measured distance from the original lens position to the centre of the cuvette).

The measurements of droplet fluorescence were performed at excitation wavelengths of 405 and 450 nm and emission intensity was read at 511 nm. During the measurements, slit "16", filter "43", sample sensitivity "1" and scan speed "high" were used.

The fluorescence intensities were measured as peak height in mm.

### Mercury lamp and CCD camera

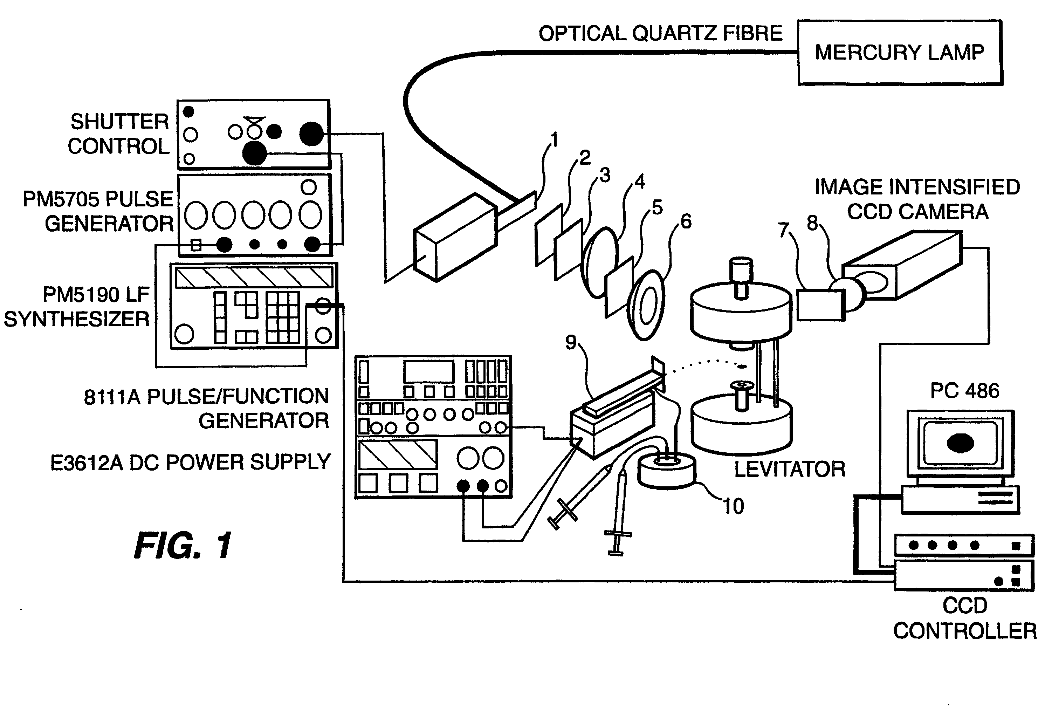

The arrangement of the mercury lamp and the CCD camera is shown in Figure 1. The arrangement consists of a mercury lamp from OPSIS and a 600 µm optical quartz fibre. An electromechanical shutter connected to a shutter control, a pulse generator PM5705 from Philips, and a LF synthesiser PM5190, also from Philips. The synthesiser was also connected to the CCD controller.

The shutter was followed by an infrared filter (BG38), NG-filters, a cylindrical lens (diameter 5cm, focal distance 5 cm), interference filters and an aperture. To avoid the negative effects of droplet evaporation, a continuous microdispenser (CDM) was used. The CMD was connected to a pulse/function generator 8111A and a power supply unit E3612A from the Hewlett Packard. The CMD was later connected to an injector, so it would be possible to introduce small enough amounts of the isoprenaline as not to change the droplet volume, and hence the fluorescence intensities, drastically.

At the other side of the levitator, at a 90° angle, an interference filter (510 nm) and a lens system (focal distance 75 mm) were placed, followed by a CCD camera from Princeton Instruments Inc., that has 1100x330 pixels and was cooled with Peltzier elements. The arrangement was connected to a computer that collected the information.

To evaluate the results, the computer program WinView 1.3 was first used. The maximum intensity values of the droplet fluorescence intensity were used as an approximation of the total intensities.

The total intensity values were subsequently calculated.

### RESULTS AND DISCUSSION

### Manual deployment of droplets and additives

For manual deployment of droplets in the ultrasonic field a syringe and needle of appropriate size is used. For adipocytes in solution, a 0.8x40 mm needle was chosen so as to avoid mechanical lysis of the cells.

To facilitate the detachment of a droplet from the needle, a capillary smeared with sunflower oil was used. This pale yellow oil was chosen so as not to interfere with the measurements by means of background fluorescence. The sample droplet is removed from the tip of the needle by the oily capillary and is then deposited in the ultrasonic field. To further facilitate the positioning of the droplet, the reflector distance of the levitator can be slightly changed. The deployment of droplets in the ultrasonic field also becomes easier with the use of maximum ultrasonic power.

After deployment in the ultrasonic field the droplet may perform oscillations. The droplet can be stabilised by adjusting the reflector distance or by decreasing the ultrasonic power. When maximum power is used, the droplet will always be flat and deformed, so in order for the droplet to be spherical, the ultrasonic power needs to be low. High ultrasonic power may also induce a kind of boiling phenomenon in the droplet, which is to say that bubbles of air make the liquid look as if it was boiling. Once formed, these bubbles are hard to get rid of, so if this occurs, it is better to remove the droplet and lower the ultrasonic power before trying again, either with the same droplet or with a new one. The bubbles disappear quickly once the droplet is outside the ultrasonic field, and since they do not seem to affect the droplet or its contents in any measurable way, it is often easier to use the same droplet when trying again.

Additives can be manually introduced into the levitated droplet by a gas chromatography syringe (although preferably, a piezoelectric dispenser or the like introduces the additives). The capillary needle does not disturb or attract the droplet from its node. This method works equally well for the addition of both liquids and solids. If solids are to be introduced, the capillary needle should be lightly dipped in the substance of interest before being introduced into the droplet.

### The fluorescence spectrophotometer

### Background fluorescence measurements

Experiments with no droplet in the levitator gave no peaks for either of the excitation wavelengths. A droplet of water (without any fluorophor present) gave no peaks either, and there was no difference if the droplet of water was placed in the middle node or in the nodes above or below the middle, or if the ultrasonic power used was high or low.

### Determination of fluorophor concentration detection limit

Different concentrations of HPTS were tested and 0.1 mM (in titration medium) was found to be the best for these measurements. Although the concentration of 10 µM was also detectable, it yielded very low peaks that proved difficult to evaluate properly.

Concentrations higher than 0.1 mM gave peaks of great height as well as width, but since the concentration of 0.1 mM HPTS had proved satisfactory; this line of experiment was not pursued further. If the fluorophor concentration is kept as low as possible, it is less likely that the cell and the reactions will be affected in undesirable ways by the fluorophor.

### Acid/base experiments and droplet

To test the HPTS dependence on changes in pH, acetic acid and sodium hydroxide were introduced in to the droplet (1 mM HPTS in water) in various quantities and ratios. The results are listed in Table 1. The fluorescence intensity, measured as peak height, decreases with decreasing pH when the excitation wavelength of 435 nm is being used. When this wavelength is 405 nm, the fluorescence intensity increases with decreasing pH.

The intensity ratio (435/405) decreases with decreasing pH and increases with increasing pH.

**Table 1.**

| *Intensities (measured as peak height in mm) and intensity ratios after addition of acetic acid (CH*_{*3*}*COOH) and sodium hydroxide (NaOH) to 2.5 µL droplet (HPTS concentration in water, 1 mM).* | | | |
|---|---|---|---|
| **Additives** | **Intensity**_{**435nm**}**(mm)** | **Intensity**_{**405**}**(mm)** | **Intensity ratio**_{**(435/405)**} |
| None | 51 | 84 | 0.61 |
| 1 µL 1 mM CH₃COOH | 34.5 | 98 | 0.35 |
| 2 µL 1 mM CH₃COOH | 29 | 111 | 0.26 |
| 2 µL 1 mM CH₃COOH and 1 µL 1 mM NaOH | 67 | 106 | 0.63 |
| 2 µL 1mM CH₃COOH and 2 µL 1mM NaOH | 86 | 104 | 0.84 |

### Droplet evaporation

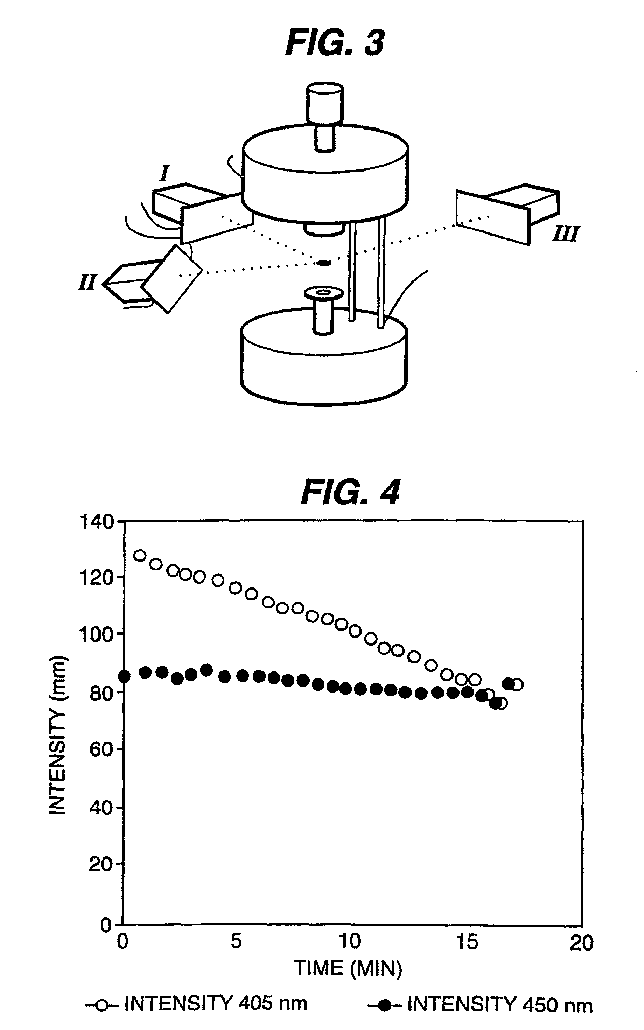

The fluorescence intensities were found to be affected by continuous evaporation from the droplet. Figure 4 shows that both wavelength intensities (measured as peak height in mm) decreases with time and evaporation. This decrease is greater and more marked for the excitation wavelength 405 nm, but the decrease also affects excitation at the wavelength 435nm.

This decrease is due to the fact that the HPTS concentration of 0.1 mM is too high to be useful. When droplet evaporation occurs, the fluorophor concentration increases to a point where it leads to self-absorption. Even though the fluorophor concentration increases, the instruments will detect less intensity.

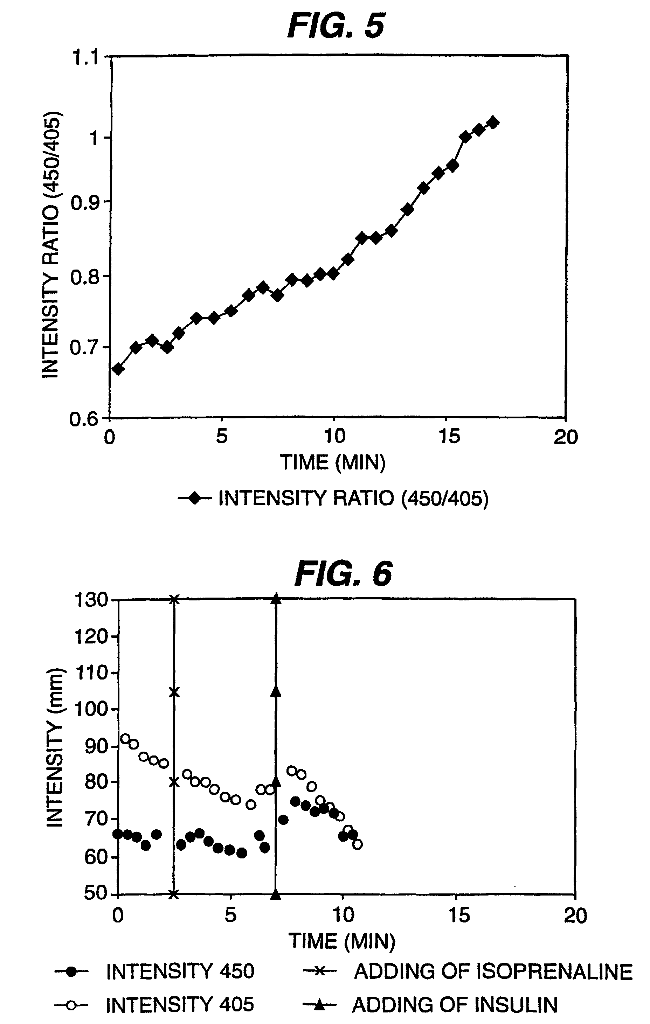

The evaporation also results in an increase of the intensity ratios with time and evaporation (Figure 5). This will present a real problem when small changes in pH are to be measured, since it will be very difficult to establish whether a rise or fall in intensity is due to volume change or pH change.

### Lipolysis in droplet

Experiments were performed to establish whether the process of lipolysis in the cells in the droplet was detectable. Figure 6 shows fluorescence intensities (measured as peak height in mm) during such an experiment. One µL of isoprenaline and insulin were added to the droplet after 2 minutes and 7 minutes, respectively.

The intensity of the excitation wavelength 405 nm decreases evenly for about 6 minutes, at which time the intensity leaps upward until the addition of insulin seemingly makes it decrease again. However, the intensity should increase with decreasing pH (that is, after the addition of isoprenaline). When insulin is added, the intensity should stop increasing since the process of lipolysis is stopped. For the excitation wavelength 435nm, the opposite should occur.

This is clearly not the case for any of the wavelength intensities. It seems likely that this, at least partly, is an effect of droplet evaporation; as Figure 4 shows, the 405 nm intensity decreases with time and decreasing volume. It is difficult, however, to explain the sudden leap upward in intensity at the time of 6 minutes. This is obviously not connected in any way to the addition of isoprenaline or insulin and the consequent volume changes. More probable is the explanation that the high fluorophor concentration makes it impossible to get any reliable results.

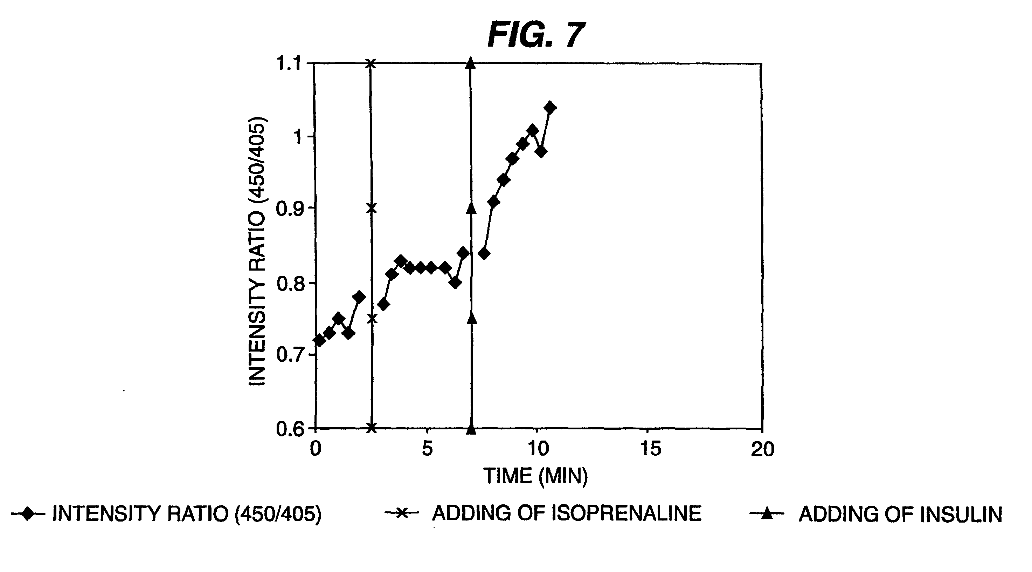

The fluorescence intensity ratios from the same experiment are demonstrated in Figure 7. When only evaporation is involved, the ratio increases evenly with time (Figure 5), but this is not the case here. There is a definite levelling of the ratio values during the time when lipolysis should be occurring within the droplet. That is what would have been expected, according to theory, although considering the behaviour of the intensity values and the fact that the high fluorophor concentration gives rise to self-absorption, this is not enough to conclude that the process of lipolysis is detectable with this method.

### Mercury lamp/CCD camera measurements

### Background fluorescence measurements

To acquire the background intensity, experiments with no droplet in the levitator were performed at the excitation wavelength of 405 nm. It was not practically possible to acquire background images at both excitation wavelengths during one series of measurements. However, the background acquired when exciting at 435nm did not differ significantly from the one acquired at 405 nm.

### Position, shape and size of droplet

As a rule, the droplets were always positioned in the node directly above the middle node of the levitator (the second node). This was for practical and operational reasons only.

The droplet was kept as spherical as possibly by adjusting the ultrasonic power of the levitator.

The average size of the droplets used was approximately 2.5 µL, although the droplets placed manually in the levitator were of slightly different sizes. This causes several problems, as will be shown below, so it is preferred to position the droplet using a piezoelectric dispenser or the like, so that the droplets will be of exactly the same volume every time.

Experiments were performed trying to minimise droplet size by letting the droplet partly evaporate and then employing the CMD to keep this smaller volume constant. This approach was only partly successful. The minimising of droplet volume worked well, yet other problems arose. It was simply impossible to manually introduce additives into these small droplets, since they attached themselves to the capillary of the GC-syringe much more readily than larger droplets. Once attached to the capillary, there was no way to reposition them in the ultrasonic field. However, this approach works well when the additives are introduced with a piezoelectric dispenser, a CMD or a similar device.

### Determination of fluorophor concentration detection limit

The experiments show that nanomolar concentrations of the fluorophor are detectable with this method. As yet, fluorophor concentrations of 100 nM, 10 nM and 1 nM have proven appropriate. By using different filters and adjusting the focus of the excitation light, the intensities resulting from the different concentrations can be optimised. For reasons mentioned above, the lowest fluorophor concentration of 1 nM was chosen for further experiments. It is possible, however, that even lower concentrations of the fluorophor may be detectable.

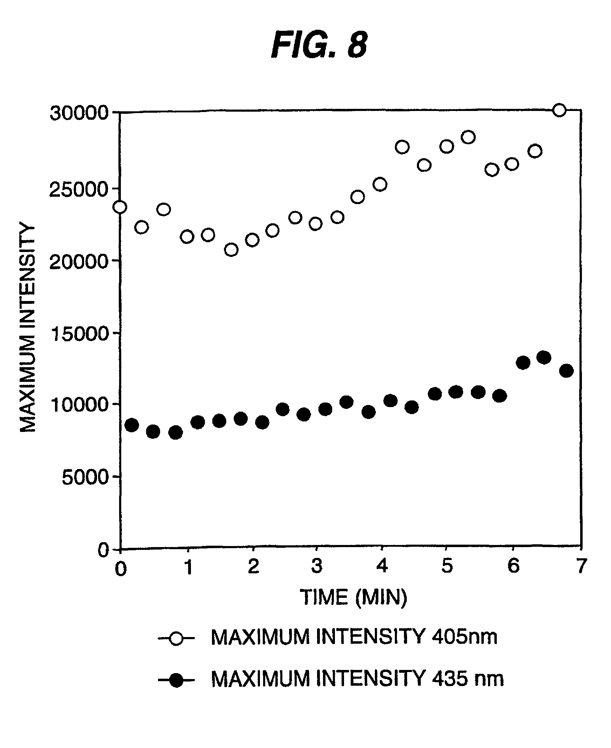

Experiments were also performed using a fluorophor concentration of 0.1 mM (Figure 8) to compare with the results from the evaporation measurements with the fluorescence spectrophotometer (Figure 4). The results show that this concentration might well be used in this experimental set-up; however, it is too high to be of any real interest except when compared to the spectrophotometer results.

### Acid/base experiments with droplet

To test the HPTS dependence on changes in pH, acetic acid and sodium hydroxide of different concentrations were introduced into the droplet (10 µM HPTS in water). The results, listed in Table 2, shows that the intensity ratios (435/405) vary with pH according to theory, while the fluorescence intensities for each wavelength are more complicated to evaluate.

The fluorescence intensity at 435 nm increases with decreasing pH of the droplet as expected, but for the excitation wavelength 405 nm, the picture is more complicated. The intensity is higher when 1 µL 100 nM sodium hydroxide is added than when 1 µL 100mM acetic acid is added, and this is not in accordance with theory. It is likely that this effect is due to different droplet volumes. The excitation wavelength of 405 nm has proven to be more sensitive than 435nm and could well be affected in this way even by very small changes in volume and droplet size. The important information is anyhow to be found in the intensity ratio, and these behave fully as expected.

**Table 2.**

| *Intensities and intensity ratio after addition of acetic acid (CH*_{*3*}*COOH) and sodium hydroxide (NaOH) to 2.5 µL droplet (HPTS concentration in water 10 µM). Results evaluated with WinView 1.3.* | | | |
|---|---|---|---|
| **Additives** | **Intensity**_{**435nm**} | **Intensity**_{**405 nm**} | **Intensity ratio**_{**(435/405)**} |
| 1 µL 100 mM NaOH | 1611 | 1442 | 1.12 |
| 1 µL 100 mM CH₃COOH | 0 | 1289 | 0 |
| 1 µL 10 mM CH₃COOH | 651 | 2027 | 0.32 |

### Droplet evaporation and the continuous microdispenser

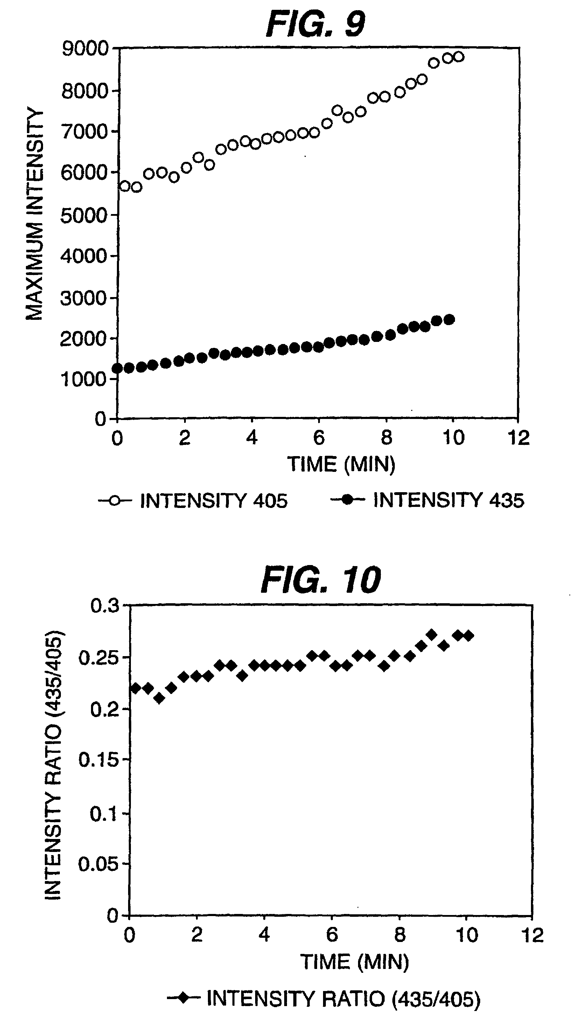

The fluorescence intensities were affected by the continuous evaporation of the droplet in this instrumental set up. Figure 9 shows that both wavelength intensities increase with time and evaporation; the opposite phenomenon to that encountered with the fluorescence spectrophotometer (Figure 4). The intensities increase for both excitation wavelengths, although the increase is greatest for the excitation wavelength 405 nm.

This increase is due to the increasing concentration of the fluorophor that results from the evaporation of water, and this also affects the intensity ratios (Figure 10). The intensity ratio increases with time and evaporation, just as it did when the fluorescence spectrophotometer was used, and it gives rise to the same problem in this application. When lipolysis is occurring in the adipocytes in the droplet, that is, when the pH of the buffer is decreasing, the intensity ratio should also decrease. But since it is in fact increasing over time, this will shield the expected change in intensity from both excitation wavelengths and from the intensity ratio as well.

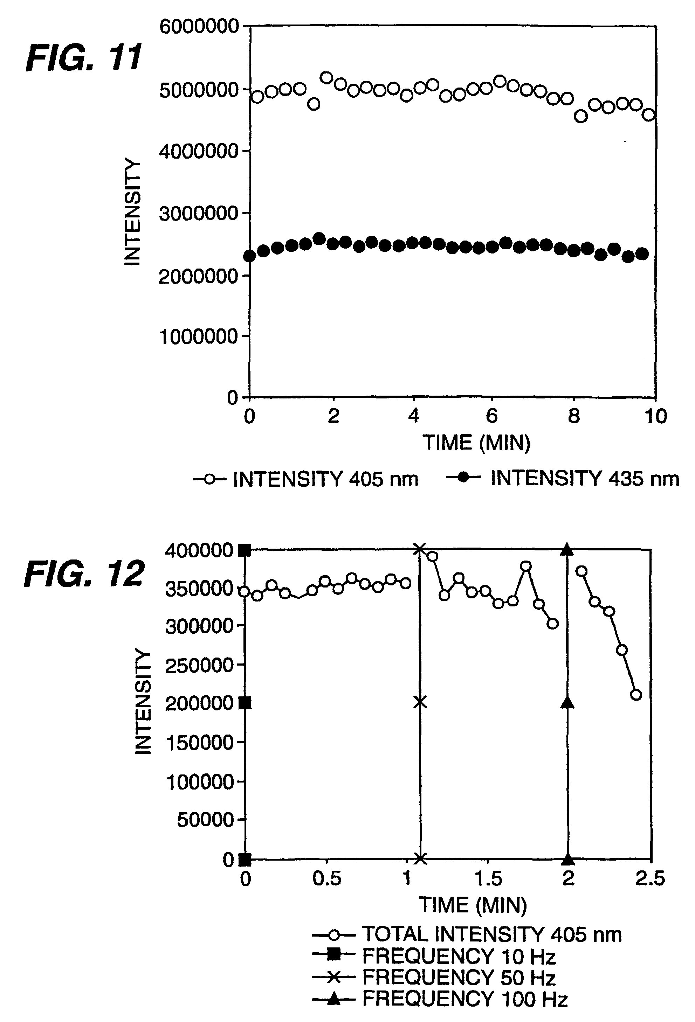

The increase in fluorescence intensities due to droplet evaporation can be avoided if water is continuously added to the droplet in small amounts. Figure 11 shows fluorescence intensities during 10 minutes when a continuous micro dispenser (CMD) was used to keep the droplet volume as close to constant as possible. The CMD was operating with a frequency of 10 Hz, which equals an addition of water of approximately 1 nL/s. The results were evaluated with the computer program Drop, and enabled the use of the total intensity values. The results were compared with those displayed in Figure 6 (evaluated with WinView 1.3).

Figure 11 shows the increase in fluorescence intensity with decreasing droplet volume has apparently ceased for both excitation wavelengths. This means that the detection of changes in fluorescence intensity due to small changes in pH can be detected with this method.

Figure 12 shows fluorescence intensities for the excitation wavelengths of 405 nm during continuous water addition to a 2.5 µL droplet of 1 nM HPTS and 1.3% PCV. The CMD was operating with the different frequencies of 10, 50 and 100 Hz. When the lower frequency is used, the intensity values form a straight line, but as the frequency increases, the intensity values decrease, responding to the volume change of the droplet when more and more water is added. This shows the importance of choosing the right CMD frequency and what will happen if too much or too little water is added to the droplet.

The original size of the droplet also affects the choice of appropriate CMD frequency. Small droplets will evaporate at a higher rate than larger droplets and therefore will need adding of water at higher frequencies than larger droplets. On the other hand, too high a CMD frequency will slowly increase the droplet volume.

This problem is easy to solve by simply choosing a frequency to be used and then letting the droplet volume stabilise itself. If the chosen frequency is too high for the droplet in question, the droplet volume will increase up to a point where the CMD at the current frequency will keep it constant. If the chosen frequency is too low, then the droplet will evaporate until it reaches the point where the volume corresponds to the CMD frequency. This done, the fluorescence intensity values will be stabilised.

Figure 17 shows a comparison between droplet evaporation and droplet volume control using the CMD during 80 seconds. During the volume control experiment, the CMD was operated with a frequency of 10Hz, approximately adding 1nL/s of water. It is clear from the result in Figure 17 that the CMD stabilises droplet volume and fluorescence.

Another problem, however, remains. Even if the volume change caused by evaporation can be avoided, the adding of the isoprenaline and the insulin also affects droplet volume. Not only will the intensity values decrease in response to drastically changed droplet volume, but the CMD frequency will no longer be optimised, so evaporation will occur again. The solution is to introduce the additives in very small amounts with a CMD or in solid form, neither of which would cause any drastic volume changes.

An injector was connected to the CMD to allow injection of isoprenaline in small amounts. This did not work out too well, largely because it takes time to rinse the CMD with the isoprenaline solution, time when droplet evaporation can and does occur. This means that before the CMD can be applied to add isoprenaline to the droplet, the evaporation already has proceeded to a point where the CMD frequency ought to be changed, only now there is no way to determine what frequency would be appropriate. The solution of isoprenaline does provide additional water to the droplet, but it also provides isoprenaline that will set off the lipolysis of the cells in the droplet, and so it is impossible to stabilise the intensity values before performing the measurements. It is preferred to use one CMD for just water and one for each additive, wherein the CMDs not in use are turned off, while the one needed for the moment provides both water and the additive in question. This way, it does not take any time between turning off the CMD that adds just water and turning on the CMD that provides the additive.

If the reagents are to be introduced as solids, other problems arise. It is quite easy to introduce solids into the droplet by using a capillary dipped in the substance of interest and then placed into the levitated droplet. It is also a quick method, hardly consuming enough time to cause problems with evaporation and CMD frequency. But with this method it is impossible to determine the amount of reagent on the capillary and the concentration of the reagents once they enter the droplet. The dissolving of the reagent in the droplet will be different every time, since the mixing procedure is affected by droplet features like shape, spinning and streams within the droplet.

### Lipolysis in droplet

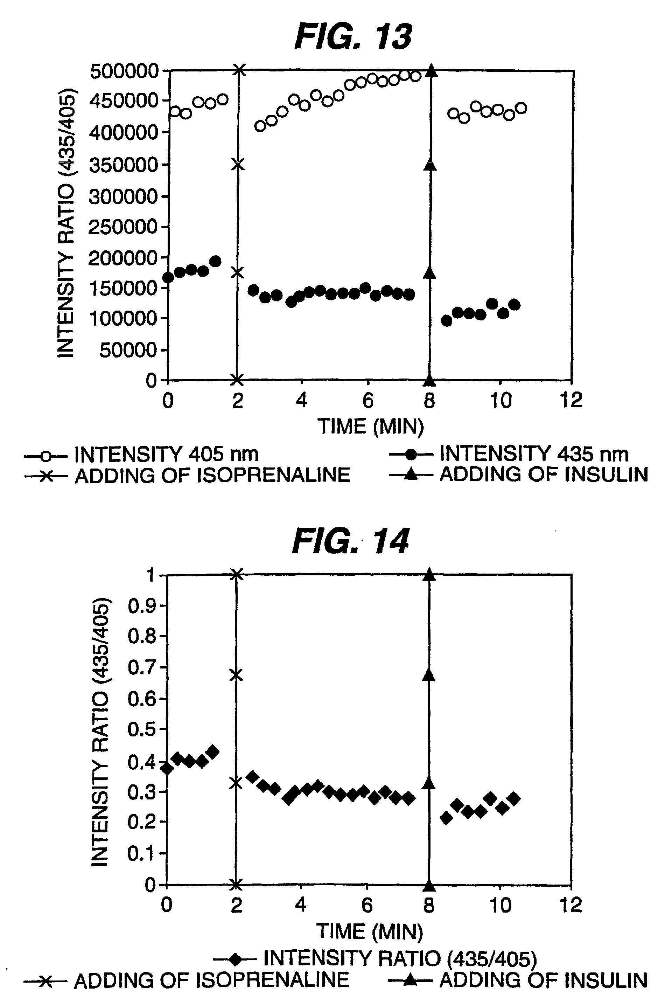

Figure 13 and Figure 14 show fluorescence intensities and intensity ratios (435/405) during an experiment where the process of lipolysis in the cells in the 2.5 µL droplet was started by the addition of approximately 1 µL of 300 nM isoprenaline to the droplet, and then stopped by the addition of around 1 µL of 1 nM insulin. The fluorophor concentration used was 1 nM HPTS in titration buffer with 1.3% PCV. During this experiment, the CMD was not used; that is to say, no additional water was added to the droplet except what was present in the solutions of isoprenaline and insulin.

After the addition of isoprenaline, the intensities for both excitation wavelengths decrease immediately. This is caused by the increase in droplet volume and the subsequent decrease of the fluorophor concentration. The same phenomenon occurs after the addition of insulin, and is caused by the same thing. The effects also show that when the intensity ratio is measured, the ratio decreases when the volume increases.

For the excitation wavelength 405 nm, the intensities then continue to rise after the addition of isoprenaline. This would be the case anyhow, even if there were no reaction going on in the droplet, because of the evaporation, but it is likely that the increase in intensity in that case would be slower. If this were solely an effect of evaporation, the intensities would not form such a steep line. When the droplet volume increases, the evaporation rate normally decreases.

Comparison of Figure 13 with Figure 11 shows that in both cases, the intensity values for the excitation wavelength 405 nm range over approximately 100000 units, a spread that might suggest that the apparent rise of the intensity values in Figure 13 is in fact no true rise. The fluorphor concentration, however, was not the same in these two experiments. Figure 13 displays results from an experiment when a fluorophor concentration of 1 nM was used, whereas Figure 11 shows results obtained with a fluorophor concentration of 10 nM. The lower fluorophor concentration gives rise to lower intensity values than the higher concentration, making a comparison of the results in Figures 13 and 11 difficult.

For the excitation wavelength 435 nm, the picture is quite different. After the addition of isoprenaline, the intensities form a straight line. If lipolysis had occurred, it would be expected that the intensities would be decreasing. But on the other hand, if evaporation were the only phenomenon here, the intensities would increase slowly with time. Since this is not the case, it must be concluded that the seemingly straight line is in fact a decrease in intensity that is shielded by the evaporation effects.

The intensity ratios (Figure 14) do decrease after the addition of isoprenaline and then continue to do so until the addition of insulin. This decrease is not great, but considering the small changes in pH in the droplet, this is nothing more than could be expected.

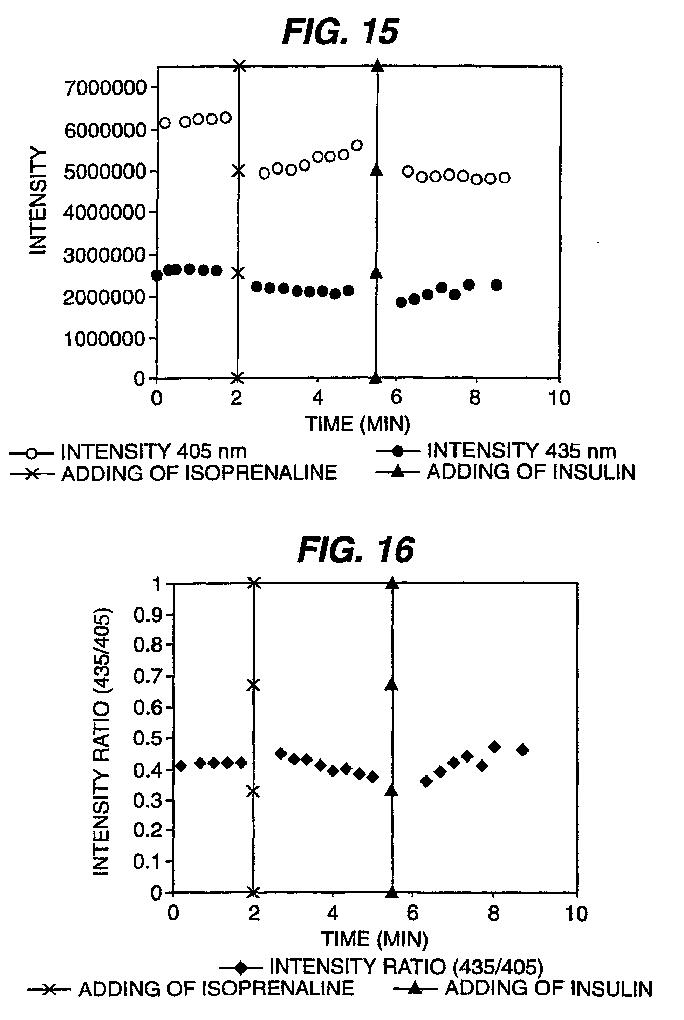

Figure 15 and Figure 16 show a similar experiment, but now with continuous addition of small amounts of water with the CMD to avoid the effects of evaporation. The CMD was operating at a frequency 10 Hz (approximately adding water at a rate of 1 nL/s). The process of lipolysis in the adipocytes in the 2.5 µL droplet was started by the addition of approximately 1 µL of 300 nM isoprenaline to the droplet, and then stopped by the addition of around 1 µL of 1 nM insulin. The fluorophor concentration used was 10nM HPTS in titration buffer with 1.3% PCV.

Before the addition of isoprenaline, the intensities for both excitation wavelengths should form a straight line. This is not quite the case for any of them, intensities slightly increasing despite the presence of the CMD. This suggests that the effects of evaporation were not totally absent when this experiment was performed, and that the stabilising of the intensity values and the volume of the droplet should have been allowed to go on for some time longer. The addition of isoprenaline and insulin also affects droplet volume, so that the intensities in both cases decrease immediately after an addition, as could be expected.

After the addition of isoprenaline and the initial decrease in intensity, the intensities for the excitation wavelength 405 nm start to increase. For the excitation wavelength 435 nm, the intensity also decreases initially in response to the added volume and then continues to decrease for as long as the isoprenaline stimulation lasts. This decrease is not marked but is clearly visible. For both excitation wavelengths, these are effects indicating the decrease in pH was set off by the addition of isoprenaline and the subsequent start of lipolysis.

It is important to remember that the CMD in the present experiments cannot be expected to flawlessly prevent the effects of evaporation once an addition of reagent is made, since this changes the volume drastically. It may be that larger droplets evaporate more slowly than smaller ones, but nevertheless there will be evaporation occurring. After the addition of isoprenaline, the CMD frequency of 10 Hz is no longer enough to keep the volume constant (especially since this does not seem to have been quite the case even before the addition of isoprenaline, although to a lesser degree). This means that even though the CMD was used, evaporation has occurred, shielding part of the pH-dependent intensity changes.

The same effects could be expected after the addition of insulin, and probably to a larger degree since it is the second time in a short while that the droplet volume increases drastically. For the excitation wavelength 405 nm, this seems not to be the case, but for the wavelength 435 nm there is no doubt that the intensities start increasing after the adding of insulin.

The intensity ratios (Figure 16) decrease according to theory when isoprenaline is added and start to increase when insulin is added. The latter is probably an effect of evaporation.

Figure 18 shows the change in intensity ratios of two experiments where a CMD was used to keep the droplet volume constant and two other CMDs were used for reagent addition. The lipolysis of 12 adipocytes was studied in 0.5µl droplets. The fluorophor concentration used was 10nM HTPS in titration buffer. Initially, the intensity ratios formed straight lines that decreased when 300nM isoprenaline was added. In one of the experiments, 1nM insulin was later added and the intensity ratios then stabilised to form a straight line again. In the other experiment, no further additions were made and the decrease in intensity ratios continued throughout the experiment. This clearly shows that the use of the CMD eliminates the problem with volume changes in the levitated droplet.

### CONCLUSIONS

It has been shown that the process of lipolysis in adipocytes in a levitated buffer droplet is detectable with this method. Advantages of the method are the small amounts of essentially everything needed for the experiments, such as fluorophor, cells, reagents and so on. It is also a quick method, once the procedures have been optimised. The absence of contacting surfaces is also a major advantage, since the droplet is in fact a small container without walls.

The use of the CMD in the study to avoid the evaporation of the droplets has proven advantageous. It has been shown that with this device, the fluorescence intensity values stabilise, an important feature when performing these experiments. One CMD is needed at all times to keep the evaporation under control. Preferably another CMD is used for adding reagents to the droplet, since this would mean that far smaller volumes of reagents could be added, small enough not to give unwanted volume effects.

## Claims

1. A system for performing small volume assays comprising:
i. a levitator for suspending a droplet;
ii. a dispenser for delivering a substance which enables an assay to be performed to the surface of the suspended droplet; and
iii. a detector system for detecting changes in the droplet,
wherein means are provided for delivering any substance suitable for counteracting the effects of evaporation to the surface of the suspended droplet with a dispenser and/or for suspending the droplet in an atmosphere saturated with water so that in use the droplet is stably maintained by compensating for evaporation from the droplet.

2. A system according to claim 1 wherein the levitator is an acoustic levitator.

3. A system according to any one of claim 1 or claim 2 wherein the dispenser is an piezoelectric dispenser.

4. A system according to any one of claims 1 to 3 wherein the substance enabling an assay to be performed delivered to the surface of the suspended droplet is a peptide, ligand, receptor, enzyme or drug compound, optionally labelled.

5. A system according to any one of the previous claims wherein the substance suitable for counteracting the effects of evaporations is water.

6. A system according to any one of the previous claims wherein there is more than one dispenser and more than one substance is delivered to the surface of the suspended droplet.

7. A system according to any one of the previous claims wherein the detection system detects changes in absorbance, fluorescence, radioactivity, chemiluminescence or colorimetry.

8. A system according to any one of the previous claims wherein the droplet is in the range of 1fl to 100µl.

9. A system according to any one of the previous claims wherein the droplet contains a protein, an enzyme, an enzyme substrates, antibodies or antibody fragments, peptides, proteases, receptors, ligands, hormones or a drug molecule.

10. A system according to any one of claims 1 to 8 wherein the droplet contains cells.

11. A system according to any one of claims 1 to 8 wherein the droplet contains beads.

12. A system according to claim 1 comprising:
1 a central illumination source;
2 one or more dispensers for forming a suspended droplet and/or for delivering a substance to the surface of a suspended droplet;
3 one or more levitators positioned adjacent the illumination source and in a position wherein the suspended droplet can be illuminated by rotation of the illumination source; and
4 detectors positioned for measuring changes in the suspended droplets.

13. A system according to claim 12 wherein the illumination source is associated with a mirror or other reflector, which causes the light emitted to be rotated around the central illumination source.

14. A system according to claim 12 or claim 13 wherein the illumination source is a laser.

15. A system according to any one of claims 13 to 14 wherein there are a number of levitators arranged so that the suspended droplets are positioned around the central illumination source so that each suspended droplet can be illuminated by the rotating light.

16. The use of the system of any one of claims 1 to 11 in an assay.

17. The use of the system of any one of claims 1 to 11 in an assay screening for drug candidates.

## Patentansprüche

1. Ein System zum Durchführen von Assays in kleinem Volumen, umfassend:
i. eine Levitationsvorrichtung ("levitator") zum Suspendieren eines Tröpfchens;
ii. eine Abgabevorrichtung zum Abgeben einer Substanz, die die Durchführung eines Assay ermöglicht, an die Oberfläche des suspendierten Tröpfchens; und
iii. ein Nachweissystem zum Nachweisen von Veränderungen im Tröpfchen,
wobei Mittel zum Abgeben einer Substanz, die zum Entgegenwirken gegen Verdunstungseffekte geeignet ist, an die Oberfläche des suspendierten Tröpfchens mit einer Abgabevorrichtung und/oder zum Suspendieren des Tröpfchens in einer mit Wasser gesättigten Atmosphäre bereitgestellt werden, so daß während der Verwendung das Tröpfchen stabil gehalten wird, indem die Verdunstung von dem Tröpfchen ausgeglichen wird.

2. System nach Anspruch 1, wobei die Levitationsvorrichtung eine akustische Levitationsvorrichtung ist.

3. System nach einem von Anspruch 1 oder Anspruch 2, wobei die Abgabevorrichtung eine piezoelektrische Abgabevorrichtung ist.

4. System nach einem der Ansprüche 1 bis 3, wobei die an die Oberfläche des suspendierten Tröpfchens abgegebene Substanz, die die Durchführung eines Assay ermöglicht, ein Peptid, Ligand, Rezeptor, Enzym oder Arzneiverbindung ist, die fakultativ markiert ist.

5. System nach einem der vorangehenden Ansprüche, wobei die Substanz, die dazu geeignet ist, Verdunstungseffekten entgegenzuwirken, Wasser ist.

6. System nach einem der vorangehenden Ansprüche, wobei es mehr als eine Abgabevorrichtung gibt und mehr als eine Substanz an die Oberfläche des suspendierten Tröpfchens abgegeben wird.

7. System nach einem der vorangehenden Ansprüche, wobei das Nachweissystem Veränderungen hinsichtlich der Extinktion, Fluoreszenz, Radioaktivität, Chemilumineszenz oder Kolorimetrie nachweist.

8. System nach einem der vorangehenden Ansprüche, wobei das Tröpfchen im Bereich von 1 fl bis 100 µl ist.

9. System nach einem der vorangehenden Ansprüche, wobei das Tröpfchen ein Protein, ein Enzym, Enzymsubstrate, Antikörper oder Antikörperfragmente, Peptide, Proteasen, Rezeptoren, Liganden, Hormone oder ein Arzneimolekül enthält.

10. System nach einem der Ansprüche 1-8, wobei das Tröpfchen Zellen enthält.

11. System nach einem der Ansprüche 1-8, wobei das Tröpfchen Kügelchen enthält.

12. System nach Anspruch 1, umfassend
1 eine zentrale Beleuchtungsquelle;
2 eine oder mehrere Abgabevorrichtungen zum Bilden eines suspendierten Tröpfchens und/oder zum Abgeben einer Substanz an die Oberfläche eines suspendierten Tröpfchens;
3 eine oder mehrere Levitationsvorrichtungen, die an die Beleuchtungsquelle benachbart positioniert ist (sind) und sich in einer Position befindet (befinden), in der das suspendierte Tröpfchen durch Rotation der Beleuchtungsquelle beleuchtet werden kann; und
4 Detektoren, die zum Messen von Veränderungen in den suspendierten Tröpfchen positioniert sind.

13. System nach Anspruch 12, wobei die Beleuchtungsquelle mit einem Spiegel oder einem anderen Reflektor assoziiert ist, der bewirkt, daß das emittierte Licht um die zentrale Beleuchtungsquelle rotiert wird.

14. System nach Anspruch 12 oder Anspruch 13, wobei die Beleuchtungsquelle ein Laser ist.

15. System nach einem der Ansprüche 13-14, wobei es eine Anzahl von Levitationsvorrichtungen gibt, die so angeordnet sind, daß die suspendierten Tröpfchen um die zentrale Beleuchtungsquelle so positioniert sind, daß jedes suspendierte Tröpfchen durch das rotierende Licht beleuchtet werden kann.

16. Verwendung des Systems nach einem der Ansprüche 1-11 in einem Assay.

17. Verwendung des Systems nach einem der Ansprüche 1-11 in einem Assay, der auf Arzneikandidaten untersucht.

## Revendications

1. Système pour la conduite d'analyses sur des petits volumes comprenant :
i. un lévitateur pour mettre en suspension une gouttelette ;
ii. un appareil distributeur pour délivrer une substance, qui permet la conduite d'une analyse à la surface de la gouttelette en suspension ; et
iii. un système de détection pour détecter des changements dans la gouttelette,
dans lequel des moyens sont prévus pour délivrer n'importe quelle substance convenable pour neutraliser les effets de l'évaporation à la surface de la gouttelette en suspension avec un appareil distributeur et/ou pour mettre en suspension la gouttelette dans une atmosphère saturée en eau afin que, lors de l'utilisation, la gouttelette soit maintenue de manière stable en compensant l'évaporation provenant de la gouttelette.

2. Système selon la revendication 1, dans lequel le lévitateur est un lévitateur acoustique.

3. Système selon l'une quelconque de la revendication 1 ou de la revendication 2, dans lequel l'appareil distributeur est un appareil distributeur piézoélectrique.

4. Système selon l'une quelconque des revendications 1 à 3, dans lequel la substance, permettant la conduite d'une analyse, délivrée à la surface de la gouttelette en suspension est un peptide, un ligand, un récepteur, une enzyme ou un composé médicament, éventuellement marqué.

5. Système selon l'une quelconque des revendications précédentes, dans lequel la substance convenable pour neutraliser les effets de l'évaporation est l'eau.

6. Système selon l'une quelconque des revendications précédentes, dans lequel il y a plus d'un appareil distributeur et plus d'une substance est délivrée à la surface de la gouttelette en suspension.

7. Système selon l'une quelconque des revendications précédentes, dans lequel le système de détection détecte les changements d'absorbance, de fluorescence, de radioactivité, de chimiluminescence ou de colorimétrie.

8. Système selon l'une quelconque des revendications précédentes, dans lequel la gouttelette se situe dans la plage comprise entre 1 fl et 100 µl.

9. Système selon l'une quelconque des revendications précédentes, dans lequel la gouttelette contient une protéine, une enzyme, des substrats enzymatiques, des anticorps ou des fragments d'anticorps, des peptides, des protéases, des récepteurs, des ligands, des hormones ou une molécule médicament.

10. Système selon l'une quelconque des revendications 1 à 8, dans lequel la gouttelette contient des cellules.

11. Système selon l'une quelconque des revendications 1 à 8, dans lequel la gouttelette contient des billes.

12. Système selon la revendication 1, comprenant :
1. une source d'éclairage centrale ;
2. un ou plusieurs appareils distributeurs pour former une gouttelette en suspension et/ou pour délivrer une substance à la surface d'une gouttelette en suspension ;
3. un ou plusieurs lévitateurs positionnés de manière adjacente à la source d'éclairage et dans une position dans laquelle la gouttelette en suspension peut être éclairée par rotation de la source d'éclairage ; et
4. des détecteurs positionnés pour mesurer les changements dans les gouttelettes en suspension.

13. Système selon la revendication 12, dans lequel la source d'éclairage est associée à un miroir ou un autre réflecteur qui provoque la rotation de la lumière émise autour de la source d'éclairage centrale.

14. Système selon la revendication 12 ou la revendication 13, dans lequel la source d'éclairage est un laser.

15. Système selon l'une quelconque des revendications 13 à 14, dans lequel il y a un certain nombre de lévitateurs disposés de sorte que les gouttelettes en suspension soient positionnées autour de la source d'éclairage centrale afin que chaque gouttelette en suspension puisse être éclairée par la lumière en rotation.

16. Utilisation du système selon l'une quelconque des revendications 1 à 11 dans une analyse.

17. Utilisation du système selon l'une quelconque des revendications 1 à 11 dans une analyse de criblage pour des candidats médicaments.
